# EUROPÄISCHE PATENTSCHRIFT

(11) **EP 2 198 994 B1**
(45) Veröffentlichungstag und Bekanntmachung des Hinweises auf die Patenterteilung: **01.04.2015**
(21) Anmeldenummer: 09014976.6
(22) Anmeldetag: 03.12.2009
(51) Int. Cl.: B23B 25/06, B23B 31/16, B23Q 3/18

(54) **Zentriervorrichtung zum Zentrieren eines Werkstücks relativ zu einer Drehachse einer Werkzeugmaschine**
Centring device for centring a workpiece relative to an axis of rotation of a machine tool
Dispositif de centrage destiné à centrer une pièce usinée par rapport à un axe rotatif d'une machine-outil

(30) Priorität: 17.12.2008 DE 102008062401; 19.11.2009 DE 102009053678
(43) Veröffentlichungstag der Anmeldung: 23.06.2010
(73) Patentinhaber: SMS Meer GmbH, 41069 Mönchengladbach (DE)
(72) Erfinder: Esser, Karl-Josef, 41179 Mönchengladbach (DE)
(74) Vertreter: Grosse, Wolf-Dietrich Rüdiger

(56) Entgegenhaltungen:
- EP-A1- 1 884 303
- EP-A2- 0 303 000
- EP-A2- 0 318 419
- DE-A1-102004 004 498

## Beschreibung

Die Erfindung betrifft eine Zentriervorrichtung gemäß dem Oberbegriff des unabhängigen Anspruchs 1 zum Zentrieren eines Werkstücks relativ zu einer Drehachse einer Werkzeugmaschine, mit den im Oberbegriff des unabhängigen Anspruchs angegebenen Merkmalen. Solche Zentrier- und Spannvorrichtungen sind durch die EP 0 303 000 A2 und EP 1 884 303 A1 bekanntgeworden.

Im Stand der Technik sind Werkzeugmaschinen bekannt, auf denen rohrförmige Werkstücke bearbeitet werden. Hierfür kann eine Werkzeugmaschinen-Spindel hohlzylindrisch ausgebildet sein, wobei das Rohr durch die Spindel hindurch von einem seitlichen Bereich der Werkzeugmaschine aus in den Bearbeitungsbereich der Maschine eingeschoben wird. An der Maschine befindet sich ein Spannfutter, das das rohrförmige Werkstück greifen und spannen muss, bevor der spanende Bearbeitungsvorgang erfolgen kann. Das rohrförmige Werkstück kann dann an seinem Außen- und Innenumfang sowie an seiner Stirnseite bearbeitet werden, d. h. das Rohrende wird einer spanenden Bearbeitung unterzogen. Hierunter sind generell beliebige Andrehungen zu verstehen und insbesondere auch die Einbringung von Innen- und Außengewinden. Die Bearbeitung erfolgt beispielsweise durch Heranführen von Werkzeugen an das Werkstück, wobei mehrere Werkzeuge von einem Revolverkopf gehalten werden können. Dabei ist es generell möglich, dass sich das Werkstück, d. h. das rohrförmige zu bearbeitende Bauteil, dreht und die Werkzeuge stillstehen; genauso können auch die Werkzeuge rotieren und das stillstehende Werkstück bearbeiten. Zum Stand der Technik wird auf die DE 10 2004 004 498 A1 hingewiesen.

Die Zustellbewegungen zwischen dem rohrförmigen Werkstück und den Werkzeugen werden dabei in bekannter Weise numerisch gesteuert. Hierfür ist es erforderlich, dass im Falle eines während der spanenden Bearbeitung ruhenden rohrförmigen Werkstücks zunächst dieses in eine definierte Lage zur Maschine gebracht wird, bevor der Werkzeugvorschub aktiviert wird und die Bearbeitung des Rohrendes durch das jeweilige rotierende Werkzeug erfolgen kann. Analoges gilt, wenn das rohrförmige Werkstück rotiert und das stehende Werkzeug an das Rohr herangefahren wird.

Problematisch ist dabei, dass das genau zentrische Spannen des rohrförmigen Werkstücks mitunter schwierig ist. Lageabweichungen vom Drehzentrum, d. h. von der Drehachse der Werkzeugmaschinen-Spindel, bedingen entsprechende Fertigungsungenauigkeiten und ungenügende Qualitäten der Fertigung. Ferner kommt es bei nicht zentrischer Spannung des Werkstücks zu umlaufenden Massenkräften (Unwuchten), die sich ebenfalls nachteilig auf die Qualität der Fertigung auswirken. In nachteiliger Weise bedingt eine nicht exakte Einspannlage des Endes des rohrförmigen Werkstücks insbesondere bei einer größeren Ausspannlänge des Werkstücks Bearbeitungsprobleme.

Der Erfindung liegt daher die Aufgabe zugrunde, eine Möglichkeit zu schaffen, mit der in schneller und einfacher Weise eine präzise Zentrierung des Werkstücks in der Werkzeugmaschine erfolgen kann. Insbesondere sollen rohrförmige Werkstücke in einer hohlzylindrischen Spindel präzise und einfach zentriert werden können. Hierzu soll eine vorteilhafte Zentriervorrichtung vorgeschlagen werden.

Die Lösung dieser Aufgabe durch die Erfindung sieht eine Zentriervorrichtung gemäß Anspruch 1 vor, bei der die Kopplungsmittel mindestens eine sich in Richtung der Mittelachse erstreckende Führungsstange und mindestens einen mit der Werkzeugmaschine fest verbindbaren Stützschuh mit einer Aufnahmeöffnung für die Führungsstange aufweisen.

Der Grundkörper hat dabei bevorzugt eine im wesentlichen zylindrische Grundkontur, wobei an dieser Grundkontur seitliche, sich radial nach außen erstreckende Fortsätze angeordnet sein können, in denen zumindest Teile der Kopplungsmittel angeordnet sind. Bevorzugt sind zwei seitliche, sich radial nach außen erstreckende und axial vorkragende Fortsätze vorgesehen, die sich beiderseits der Mittelachse diametral gegenüberliegen. Der Grundkörper hat dadurch eine brillenförmige Ausgestaltung.

Die Führungsstange hat dabei zumindest in ihrem der Werkzeugmaschine zugewandten Endbereich vorzugsweise eine zylindrische Form. Die Aufnahmeöffnung im Stützschuh kann dabei zylindrisch ausgebildet sein und zwischen der Aufnahmeöffnung und der zylindrischen Form der Führungsstange kann Spielpassung vorliegen. Der mindestens eine Stützschuh kann mit einem Spannfutter der Werkzeugmaschine verschraubbar ausgebildet sein.

Die Zentriermittel werden bevorzugt durch mindestens zwei Spannklauen gebildet, die am Grundkörper angeordnet sind. Die Zentriermittel werden dabei vorzugsweise durch drei oder mehr Spannklauen gebildet. Die Spannkauen sind bevorzugt äquidistant um den Umfang des Grundkörpers herum angeordnet. Sie sind zur Anlage am zu zentrierenden Werkstück an einem radial außenliegenden Umfang ausgebildet. Die Spannklauen können auch zur Anlage am zu zentrierenden Werkstück Anlageflächen aufweisen, die radial nach innen vorspringen. Schließlich können die Anlageflächen mit einer Einführschräge versehen sein.

Die Erfindung umfasst auch eine nicht beanspruchte Werkzeugmaschine mit einer so ausgebildeten Zentriervorrichtung.

Die Werkzeugmaschine hat bevorzugt eine drehangetriebene Werkstückspindel, die das rohrförmige Werkstück spannen kann. Die Werkzeuge können an oder in einem Revolverkopf ortsfest angeordnet sein. Der Revolverkopf kann mehrere Werkzeuge aufweisen, die um den Umfang des Revolverkopf gleichförmig verteilt angeordnet sind.

Am Revolverkopf können Werkzeuge zur Bearbeitung des äußeren Umfangs und/oder der Stirnseite des rohrförmigen Werkstücks angeordnet sein; am Revolverkopf können auch Werkzeuge zur Bearbeitung des inneren Umfangs des rohrförmigen Werkstücks angeordnet sein. Ferner kann am Revolverkopf mindestens ein Werkzeug zur Drehbearbeitung des rohrförmigen Werkstücks angeordnet sein, ebenso mindestens ein Werkzeug zur Herstellung eines Außen-oder Innengewindes am rohrförmigen Werkstück.

Zum zentrierten, lagegenauen Einspannen des rohrförmigen Werkstücks insbesondere mit kurzer Ausspannlänge kommt also eine temporär mit dem Einspannfutter über Stütz- und Führungsschuhe verbindbare und sich gegen dieses abstützende Zentriervorrichtung zum Einsatz. Diese weist bevorzugt in einem brillenartigen Gehäuse (Grundkörper) zwei im Abstand parallel zueinander verlaufende Zentrier- bzw. Führungsstangen auf, die beim Verfahren der Zentriervorrichtung auf das Einspannfutter zu entsprechend dem Verfahrweg in die ihnen zugeordneten Stütz- und Führungsschuhe eintauchen und die Zentriervorrichtung exakt zur Drehmitte bzw. Drehmittenachse und damit genau konzentrisch zum einzuspannenden Rohr positionieren.

Die Zentriervorrichtung besitzt weiterhin vorzugsweise drei umfangsverteilt um 120° versetzt zueinander angeordnete Hilfs-Spannklauen (Zentriermittel), die radial gegen das Rohrende angestellt werden und das Rohrende, nachdem das Rohr eingeschoben worden ist, dann in der genau vorzentrierten Lage einspannen. Wenn danach die Spannklauen (Zentriermittel) des Einspannfutters das Rohrende zur sich anschließenden Bearbeitung übernommen haben, d. h. mit exakter Rohrpositionierung, werden die Hilfs-Spannklauen (Zentriermittel) gelöst; die Zentriervorrichtung kann dann in ihre Außerbetriebsposition gefahren werden.

Das eingeschobene rohrförmige Werkstück wird über zentrisch wirkende Spannklauen (Zentriermittel) in der Zentriervorrichtung mit hoher Genauigkeit zur Maschinenmitte gespannt. Dann erfolgt die Spannung durch das Spannfutter mit exakter Rohrpositionierung wie vorher in der Zentriervorrichtung.

In der Zeichnung ist ein Ausführungsbeispiel der Erfindung dargestellt. Es zeigen:
- Fig. 1: eine perspektivische Ansicht einer Werkzeugmaschine zur Bearbeitung, eines rohrförmigen Werkstücks;
- Fig. 2: eine perspektivische Ansicht eines Zentriermittels, das in die Werkzeugmaschine nach Fig. 1 eingesetzt ist und ein rohrförmiges Werkstück zentriert;
- Fig. 3: eine perspektivische Ansicht des Zentriermittels; und
- Fig. 4: einen Radialschnitt durch das Zentriermittel, während dieses in die Werkzeugmaschinen eingesetzt ist und das rohrförmige Werkzeug zentriert.

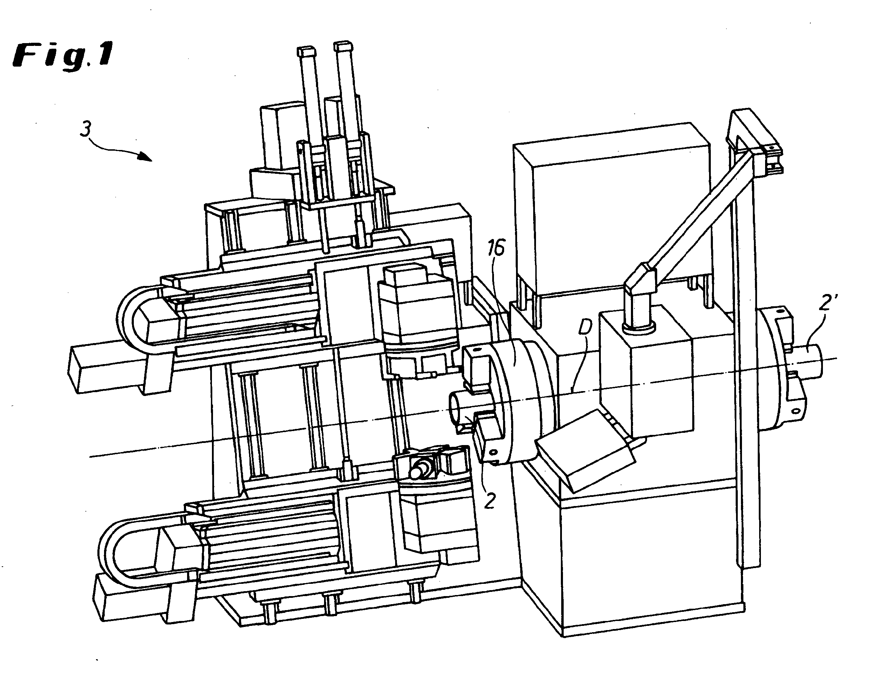

In Fig. 1 ist eine Werkzeugmaschine 3 in Form eines Bearbeitungszentrums gezeigt, die eine Werkstückspindel mit einem Spannfutter 16 aufweist; die Werkstückspindel rotiert eine Drehachse D. Die Werkstückspindel trägt ein rohrförmiges Werkstück 2, das in eine Bohrung in der Werkstückspindel eingeschoben ist, d. h. das Werkstück 2 kann mit einem Ende 2' im hinteren Bereich aus der Werkstückspindel herausragen. Im vorderen Bereich wird das Werkstück 2 vom Spannfutter 16 konzentrisch zur Drehachse D gespannt.

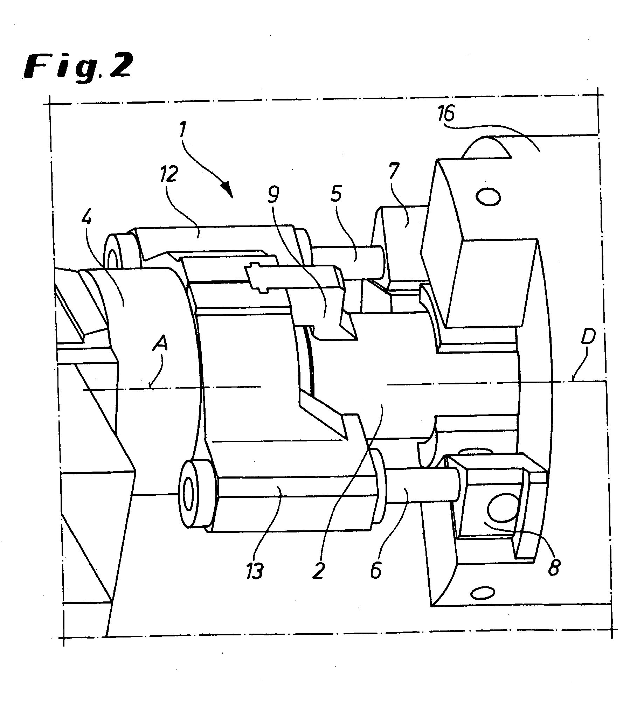

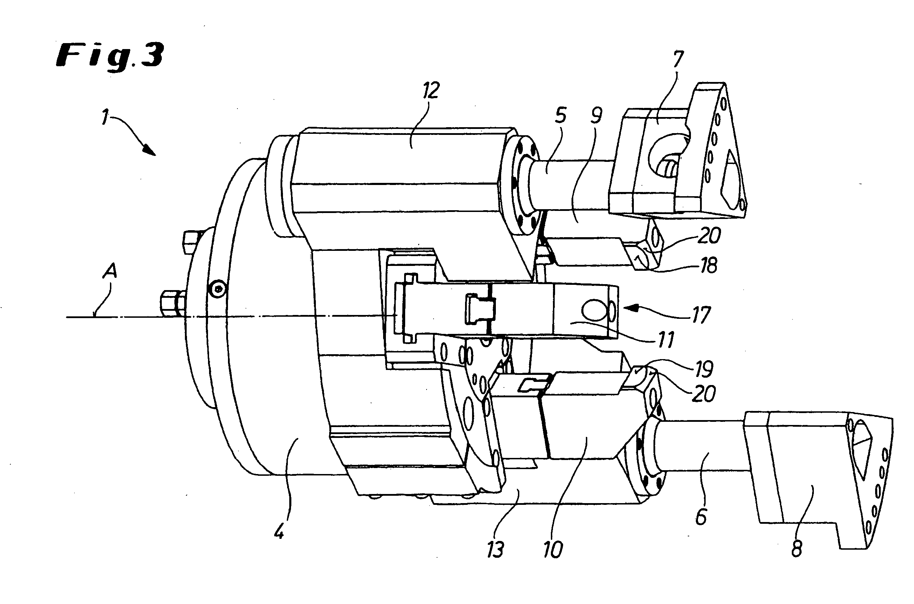

Vor der spanenden Bearbeitung des rohrförmigen Werkstücks 2 in der Werkzeugmaschine 3 ist es erforderlich, das Werkstück 2 in dem Spannfutter 16 genau zentrisch zu spannen. Hierfür wird es vor dem eigentlichen Spannen mittels einer Zentriervorrichtung 1 ausgerichtet, wie den Figuren 2 bis 4 zu entnehmen ist.

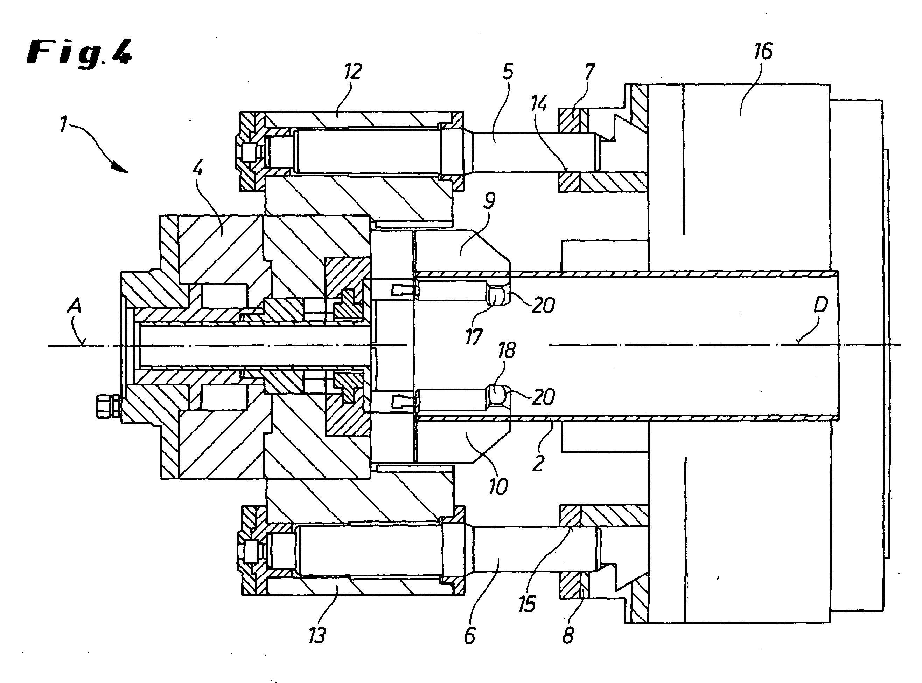

Die Zentriervorrichtung 1 hat einen im wesentlichen zylindrischen Grundkörper 4, an dem sich zwei diagonal gegenüber liegende Fortsätze 12 und 13 radial nach außen erstrecken, wodurch die Zentriervorrichtung 1 eine im wesentlichen brillenförmige Gestalt hat. In den beiden Fortsätzen 12 und 13 sind - wie es am besten in Fig. 4 gesehen werden kann - zylindrische Führungsstangen 5 und 6 befestigt, wobei die Achsrichtung der Führungsstangen 5, 6 in Richtung einer Mittelachse A der Zentriervorrichtung 1 weist. Diese Mittelachse A ist bei an die Werkzeugmaschine 3 angesetzter Zentriervorrichtung 1 identisch mit der Drehachse D der Werkzeugmaschine 3.

Das präzise Ansetzen der Zentriervorrichtung 1 an die Werkzeugmaschine 3 erfolgt mittels Kopplungsmitteln 5, 6, 7, 8, die neben den bereits genannten Führungsstangen 5 und 6 weiterhin Stützschuhe 7 und 8 umfassen. Die Stützschuhe 7, 8 sind am Spannfutter 16 der Werkzeugmaschine 3 angeschraubt, bzw. befestigt. Die Stützschuhe 7, 8 haben je eine Aufnahmeöffnung 14 und 15 in Form einer Bohrung, die zur Aufnahme der voreilenden Enden der Führungsstangen 5, 6 ausgebildet sind. Wird die Zentriervorrichtung 1 mit den Führungsstangen 5, 6 in die Aufnahmeöffnungen 14, 15 eingeschoben, ist sie und insbesondere ihr Grundkörper 4 bezüglich der Lage präzise zur Drehachse D positioniert.

Am Grundkörper 4 sind weiterhin drei Zentriermittel 9, 10, 11 in Form von Spannklauen präzise montiert, die jeweilige Anlageflächen 17, 18 und 19 haben, die bestimmungsgemäß zur Kontaktierung des Außenumfangs des rohrförmigen Werkstücks 2 ausgebildet sind.

Der Außenumfang des Werkstücks 2 ist die Referenzfläche, die zum Zentrieren dient. Damit die Zentriervorrichtung mit den das Werkstück 2 kontaktierenden Zentriermitteln 9, 10, 11 in einfacher Weise in die Werkzeugmaschine 3 eingesetzt werden kann, weisen die Anlageflächen 17, 18, 19 angrenzende Einführschrägen (Abflachungen) 20 auf.

Zur Verbringung der Zentriervorrichtung 1 in die Werkzeugmaschine 3 und in ihre Eingriffsposition wird die Vorrichtung 1 in Richtung der Drehachse D so eingeschoben bzw. verfahren, dass die Führungsstangen 5, 6 in die Ausnahmeöffnungen 14, 15 der Stützschuhe 7, 8 eingreifen, die mit dem Spannfutter 16 verschraubt sind.

Gleichzeitig greifen die Zentriermittel 9, 10, 11 den Außenumfang des rohrförmigen Werkstücks 2, das einen gewissen Betrag aus dem Spannfutter 16 herausragt, und zentrieren somit das Werkstück 2 zum Spannfutter 16. Dieses kann dann festgezogen werden.

Die Zentriervorrichtung 1 wird dann wieder in Richtung der Drehachse D abgezogen und aus der Werkzeugmaschine 3 entfernt, wodurch der Zentriervorgang abgeschlossen ist. Möglich ist es auch, die Handhabung der Zentriervorrichtung 1 durch einen Handhabungsautomaten (Roboter) zu bewerkstelligen.

### Bezugszeichenliste:

- 1: Zentriervorrichtung
- 2: Werkstück
- 2': Ende des Werkstücks
- 3: Werkzeugmaschine
- 4: Grundkörper
- 5: Kopplungsmittel (Führungsstange)
- 6: Kopplungsmittel (Führungsstange)
- 7: Kopplungsmittel (Stützschuh)
- 8: Kopplungsmittel (Stützschuh)
- 9: Zentriermittel
- 10: Zentriermittel
- 11: Zentriermittel
- 12: Fortsatz
- 13: Fortsatz
- 14: Aufnahmeöffnung
- 15: Aufnahmeöffnung
- 16: Spannfutter
- 17: Anlagefläche
- 18: Anlagefläche
- 19: Anlagefläche
- 20: Einführschräge

- D: Drehachse
- A: Mittelachse

## Patentansprüche

1. Zentriervorrichtung (1) zum Zentrieren eines Werkstücks (2) relativ zu einer Drehachse (D) einer Werkzeugmaschine (3), umfassend:
einen Grundkörper (4) mit einer Mittelachse (A),
Kopplungsmittel (5, 6, 7, 8) zum formschlüssigen Koppeln des Grundkörpers (4) an der Werkzeugmaschine (2) und
Zentriermittel (9, 10, 11) zum Kontaktieren des Werkstücks (2) an einer Referenzfläche und zum Zentrieren des Werkstücks (2) relativ zum Grundkörper (4),
**dadurch gekennzeichnet**,
dass die Kopplungsmittel (5, 6, 7, 8) mindestens eine sich in Richtung der Mittelachse (A) erstreckende Führungsstange (5, 6) und mindestens einen mit der Werkzeugmaschine (3) fest verbindbaren Stützschuh (7, 8) mit einer Aufnahmeöffnung (14, 15) für die Führungsstange (5, 6) aufweisen.

2. Zentriervorrichtung nach Anspruch 1, **dadurch gekennzeichnet, dass** der Grundkörper (4) eine im wesentlichen zylindrische Grundkontur aufweist, wobei an dieser Grundkontur seitliche, sich radial nach außen erstreckende Fortsätze (12, 13) angeordnet sind, in denen zumindest Teile der Kopplungsmittel (5, 6) angeordnet sind.

3. Zentriervorrichtung nach Anspruch 2, **dadurch gekennzeichnet, dass** zwei seitliche, sich radial nach außen erstreckende Fortsätze (12, 13) angeordnet sind, die sich beiderseits der Mittelachse (A) diametral gegenüberliegen.

4. Zentriervorrichtung nach Anspruch 3, **dadurch gekennzeichnet, dass** der Grundkörper (4) eine brillenförmige Ausgestaltung aufweist.

5. Zentriervorrichtung nach Anspruch 1, **dadurch gekennzeichnet, dass** die Führungsstange (5, 6) zumindest in ihrem der Werkzeugmaschine (3) zugewandten Endbereich eine zylindrische Form aufweist.

6. Zentriervorrichtung nach Anspruch 1, **dadurch gekennzeichnet, dass** die Aufnahmeöffnung (14, 15) im Stützschuh (7, 8) zylindrisch ausgebildet ist und zwischen der Aufnahmeöffnung (14, 15) und der zylindrischen Form der Führungsstange (5, 6) Spielpassung vorliegt.

7. Zentriervorrichtung nach Anspruch 1, **dadurch gekennzeichnet, dass** der mindestens eine Stützschuh (7, 8) mit einem Spannfutter (16) der Werkzeugmaschine (3) verschraubbar ausgebildet ist.

8. Zentriervorrichtung nach einem der Ansprüche 1 bis 7, **dadurch gekennzeichnet, dass** die Zentriermittel (9, 10, 11) durch mindestens zwei Spannklauen gebildet werden, die am Grundkörper (4) angeordnet sind.

9. Zentriervorrichtung nach Anspruch 8, **dadurch gekennzeichnet, dass** die Zentriermittel (9, 10, 11) durch drei oder mehr Spannklauen gebildet werden.

10. Zentriervorrichtung nach Anspruch 9, **dadurch gekennzeichnet, dass** die Spannkauen (9, 10, 11) äquidistant um den Umfang des Grundkörpers (4) herum angeordnet sind.

11. Zentriervorrichtung nach einem der Ansprüche 8 bis 10, **dadurch gekennzeichnet, dass** die Spannklauen (9, 10, 11) zur Anlage an einem radial außenliegenden Umfang am zu zentrierenden Werkstück (2) ausgebildet sind.

12. Zentriervorrichtung nach Anspruch 11, **dadurch gekennzeichnet, dass** die Spannklauen (9, 10, 11) zur Anlage am zu zentrierenden Werkstück (2) Anlageflächen (17, 18, 19) aufweisen, die radial nach innen vorspringen.

13. Zentriervorrichtung nach Anspruch 12, **dadurch gekennzeichnet, dass** die Anlageflächen (17,18, 19) mit einer Einführschräge (20) versehen sind.

## Claims

1. A centering device (1) for centering a workpiece (2) relative to a rotational axis (D) of a machine tool (3), comprising:
a base body (4) with a center axis (A),
coupling means (5, 6, 7, 8) for positively coupling the base body (4) to the machine tool (2), and
centering means (9, 10, 11) for contacting the workpiece (2) on a reference surface and for centering the workpiece (2) relative to the base body (4),
**characterized in**
that the coupling means (5, 6, 7, 8) feature at least one guide rod (5, 6) that extends in the direction of the center axis (A) and at least one supporting shoe (7, 8) that can be rigidly connected to the machine tool (3) and contains a receptacle opening (14, 15) for the guide rod (5, 6).

2. The centering device according to Claim 1, **characterized in that** the base body (4) has an essentially cylindrical base contour, wherein lateral extensions (12, 13), which extend radially outward, are arranged on this base contour and at least parts of the coupling means (5, 6) are arranged in said extensions.

3. The centering device according to Claim 2, **characterized in that** two lateral extensions (12, 13), which extend radially outward, are provided and arranged diametrically opposite of one another to both sides of the center axis (A).

4. The centering device according to Claim 3, **characterized in that** the base body (4) has a spectacle-shaped design.

5. The centering device according to Claim 1, **characterized in that** the guide rod (5, 6) has a cylindrical shape at least in its end region on the side of the machine tool (3).

6. The centering device according to Claim 1, **characterized in that** the receptacle opening (14, 15) in the supporting shoe (7, 8) is realized cylindrically and a clearance fit exists between the receptacle opening (14, 15) and the cylindrical shape of the guide rod (5, 6).

7. The centering device according to Claim 1, **characterized in that** the at least one supporting shoe (7, 8) is realized such that it can be screwed in place with a chuck (16) of the machine tool (3).

8. The centering device according to one of Claims 1 to 7, **characterized in that** the centering means (9, 10, 11) are formed by at least two clamping claws that are arranged on the base body (4).

9. The centering device according to Claim 8, **characterized in that** the centering means (9, 10, 11) are formed by three or more clamping claws.

10. The centering device according to Claim 9, **characterized in that** the clamping claws (9, 10, 11) are equidistantly arranged around the circumference of the base body (4).

11. The centering device according to one of Claims 8 to 10, **characterized in that** the clamping claws (9, 10, 11) are designed for contacting the workpiece (2) to be centered on a radially outer circumference.

12. The centering device according to Claim 11, **characterized in that** the clamping claws (9, 10, 11) feature contact surfaces (17, 18, 19) that project radially inward for contacting the workpiece (2) to be centered.

13. The centering device according to Claim 12, **characterized in that** the contact surfaces (17, 18, 19) are provided with a lead-in chamfer (20).

## Revendications

1. Dispositif de centrage (1) pour le centrage d'une pièce usinée (2) par rapport à un axe de rotation (D) d'une machine-outil (3), comprenant :
un corps de base (4) présentant un axe central (A) ;
des moyens de couplage (5, 6, 7, 8) pour le couplage en correspondance géométrique du corps de base (4) à la machine-outil (2) et
des moyens de centrage (9, 10, 11) pour mettre la pièce usinée (2) en contact avec une surface de référence et pour centrer la pièce usinée (2) par rapport au corps de base (4),
**caractérisé en ce que**
les moyens de couplage (5, 6, 7, 8) présentent au moins une barre de guidage (5, 6) s'étendant en direction de l'axe central (A) et au moins un sabot d'appui (7, 8) raccordable fixement à la machine-outil (3) et comportant un orifice récepteur (14, 15) pour la barre de guidage (5, 6).

2. Dispositif de centrage selon la revendication 1, **caractérisé en ce que** le corps de base (4) présente un contour de base sensiblement cylindrique, étant disposées sur ce contour de base des rallonges latérales (12, 13) s'étendant radialement vers l'extérieur et dans lesquelles au moins des pièces des moyens de couplage (5, 6) sont disposées.

3. Dispositif de centrage selon la revendication 2, **caractérisé en ce que** sont disposées deux rallonges latérales (12, 13) s'étendant radialement vers l'extérieur qui sont diamétralement opposées des deux côtés de l'axe central (A).

4. Dispositif de centrage selon la revendication 3, **caractérisé en ce que** le corps de base (4) a une conformation en forme de lunettes.

5. Dispositif de centrage selon la revendication 1, **caractérisé en ce que** la barre de guidage (5, 6) a une forme cylindrique du moins dans sa partie terminale tournée vers la machine-outil (3).

6. Dispositif de centrage selon la revendication 1, **caractérisé en ce que** l'orifice récepteur (14, 15) est pratiqué en forme cylindrique dans le sabot d'appui (7, 8) et qu'il y a une adaptation de jeu entre l'orifice récepteur (14, 15) et la forme cylindrique de la barre de guidage (5, 6).

7. Dispositif de centrage selon la revendication 1, **caractérisé en ce que** l'au moins un sabot d'appui (7, 8) est réalisé de manière à pouvoir être vissé à un fourreau de serrage (16) de la machine-outil (3).

8. Dispositif de centrage selon une des revendications 1 à 7, **caractérisé en ce que** les moyens de centrage (9, 10, 11) sont constitués par au moins deux griffes de serrage qui sont disposées au niveau du corps de base (4).

9. Dispositif de centrage selon la revendication 8, **caractérisé en ce que** les moyens de centrage (9, 10, 11) sont constitués par trois griffes de serrage ou plus.

10. Dispositif de centrage selon la revendication 9, **caractérisé en ce que** les griffes de serrage (9, 10, 11) sont disposées équidistantes autour de la circonférence du corps de base (4).

11. Dispositif de centrage selon une des revendications 8 à 10, **caractérisé en ce que** les griffes de serrage (9, 10, 11) sont conçues pour être en contact avec une circonférence radialement extérieure de la pièce usinée à centrer (2).

12. Dispositif de centrage selon la revendication 11, **caractérisé en ce que** les griffes de serrage (9, 10, 11) venant en contact avec la pièce usinée à centrer (2) présentent des surfaces de contact (17, 18, 19) qui sont proéminentes radialement vers l'intérieur.

13. Dispositif de centrage selon la revendication 12, **caractérisé en ce que** les surfaces de contact (17, 18, 19) sont pourvues d'une pente d'introduction (20).
